(19) **Europäisches Patentamt**
**European Patent Office**
**Office européen des brevets**

(11) **EP 1 069 486 B2**

(12) **NOUVEAU FASCICULE DE BREVET EUROPEEN**
Après la procédure d'opposition

(45) Date de publication et mention de la décision concernant l'opposition:
**22.10.2008 Bulletin 2008/43**

(45) Mention de la délivrance du brevet:
**04.08.2004 Bulletin 2004/32**

(21) Numéro de dépôt: **00401870.1**

(22) Date de dépôt: **30.06.2000**

(51) Int Cl.:
*G05B 13/02* (2006.01)    *G05B 23/02* (2006.01)

(54) **Procédé de pilotage d'un processus dynamique complexe.**

Verfahren zur Steuerung eines Komplexen Dynamischen Prozesses

Method for controlling a complex dynamic process

(84) Etats contractants désignés:
**AT BE CH CY DE DK ES FI FR GB GR IE IT LI LU MC NL PT SE**

(30) Priorité: **01.07.1999 FR 9908417**

(43) Date de publication de la demande:
**17.01.2001 Bulletin 2001/03**

(73) Titulaire: **ArcelorMittal France**
**93200 Saint Denis (FR)**

(72) Inventeurs:
• **Le Goc, Marc**
**13300 Salon de Provence (FR)**
• **Lesaffre, Francois-Marie**
**13800 Istres (FR)**
• **Barles, Michel**
**13800 Istres (FR)**
• **Thirion, Claude**
**13310 Saint Martin de Crau (FR)**
• **Dolenc, Norbert**
**13180 Gignac la Nerthe (FR)**

(74) Mandataire: **Lagrange, Jacques Etienne M.M. et al Cabinet Lavoix**
**2, place d'Estienne d'Orves**
**75411 Paris Cedex 09 (FR)**

(56) Documents cités:
WO-A-97/50021          WO-A-99/10758
DE-A- 19 732 046       DE-A- 19 734 947
US-A- 4 965 743        US-A- 5 831 850

EP 1 069 486 B2

**Description**

L'invention concerne un procédé et un dispositif pour la conduite d'un processus complexe ; ces processus disposent généralement d'un niveau de contrôle-commande numérique selon le modèle dit " CIM " (" Computer Integrated Manufacturing " en langue anglaise).

Ce procédé et ce dispositif intègrent des techniques classiques concernant :

- l'acquisition et la qualification de données numériques et symboliques,
- les calculs numériques,
- le traitement du signal et la reconnaissance de formes,
- l'intelligence artificielle, notamment des techniques de représentation des connaissances incertaines, spatiales et temporelles en règles de logique des prédicats du premier ordre, en objets et en chroniques, et les techniques de raisonnements associées,
- le contrôle automatique des systèmes continus et/ou des systèmes discrétisés, dans le temps et dans l'espace.
- les algorithmes de contrôle de systèmes en temps réel.

Pour décrire l'état d'un processus et l'évolution de l'état d'un processus, on fait appel aux définitions classiques suivantes :

- Un processus est un système de transformation d'un flux entrant en un flux sortant, de matière, d'énergie ou d'informations ; dans un système tel qu'un haut-fourneau de sidérurgie ou un four tournant de cimenterie, le processus transforme la matière ou l'énergie.
- Un tel système de transformation procède selon un ensemble de phénomènes reliés entre eux selon une finalité commune, correspondant à des objectifs de production, dans un environnement imparfait.
- L'objectif de production du processus peut être exprimé en terme de respect de contraintes portant sur certains flux entrants et sur certains flux sortants ; ces contraintes peuvent à leur tour être exprimées en terme de visées ou d'intervalles de valeurs ; les visées portant sur des flux entrant concernent par exemple la position des actionneurs du processus que l'opérateur de conduite du processus doit respecter, comme par exemple, dans le cas d'un haut-fourneau, une proportion minimum et maximum de consommation de charbon, un débit minimum et maximum d'oxygène, alors que les visées portant sur des flux sortant expriment des contraintes portant sur les sorties que l'opérateur de conduite doit satisfaire, qui concernent par exemple un intervalle de températures de fonte, un débit journalier minimum de fonte, un intervalle de teneur en Si dans la fonte ou le laitier.
- L'environnement est qualifié imparfait au sens où il est défini de manière imprécise, incertaine et incomplète ; cet environnement limite les possibilités de production du processus.
- Un modèle de comportement d'un processus est un ensemble organisé de connaissances, ou " corpus " de connaissances, qui sert à prédire l'état du système en fonction de la valeur de grandeurs de perception de ce système et, par exemple, de valeurs de paramétrage de ce modèle.
- Un processus est dynamique lorsque les grandeurs qui interviennent dans son modèle de fonctionnement, comme les variables d'état X, les variables d'entrées U et les variables de sorties Y, sont liées par des relations temporelles.
- Le comportement d'une grandeur peut se définir par la relation entre la valeur de cette grandeur x et le temps t ; il se représente alors par x(t).
- Selon les règles classiques définies dans le domaine technique du contrôle automatique des systèmes, l'état d'un système à un instant d'observation t peut être défini par l'ensemble des couples de valeurs (X'(t), X(t)) relatifs à chaque grandeur de perception, où X' désigne la dérivée par rapport au temps t de la grandeur X ; le processus peut alors être décrit par une relation du type :

$$\underline{X}'(t) = f\,[\,\underline{\theta},\,\underline{X}(t),\,\underline{U}(t)\,]\ \text{et}\ \underline{Y}(t) = h\,[\,\underline{\theta}\,,\,\underline{X}(t),\,\underline{U}(t)\,]$$

où $\theta$ désigne des paramètres, t la variable temporelle ici continue, f() et h() des fonctions décrivant le processus.
- Une trajectoire d'état d'un processus sur un intervalle de temps $[t_{min}, t_{max}]$ est définie par une suite de points (X'(t), X(t)) où les valeurs de t appartiennent à cet intervalle.
- Un processus dynamique est complexe dans l'un ou l'autre des cas suivants :

  - absence de modèle mathématique de comportement ou modèle mathématique de comportement inopérant ;
  - absence de modèle physique de comportement, par exemple du fait de l'insuffisance des connaissances scientifiques, ou modèle physique de comportement inopérant ne donnant lieu à aucun algorithme de calcul numérique exploitable, par exemple : modèle non inversible, modèle non calculatoire, modèle conduisant à des temps de calcul rédhibitoires par rapport au temps de réponse requis , modèle chaotique.

Dans le cas des processus dynamiques complexes, on utilise donc généralement des modèles symboliques rassemblant l'ensemble des connaissances et de l'expertise tirées de l'observation du comportement du processus ; d'une manière classique, on peut construire un tel modèle de comportement à partir des connaissances détenues par des experts en conduite du processus concerné, en faisant appel :

- à des formalismes logiques permettant de représenter ces connaissances,
- à des outils méthodologiques permettant l'acquisition desdites connaissances en vue de leur représentation,
- à des techniques de résolution de problèmes adaptées pour trouver automatiquement des solutions à des problèmes exprimés selon ces formalismes,

Parmi les formalismes employés, on peut citer :

- La représentation des connaissances descriptives sous forme d'objets, de classes et de méta-classes,
- La représentation des connaissances déductives en logique des prédicats du premier ordre,
- La représentation de connaissances temporelles sous la forme d'une logique temporelle réïfiée,
- La représentation de connaissances spatio-temporelles sous la forme de graphes d'événements discrets.

Parmi les techniques de résolution de problèmes, on peut citer :

- Le raisonnement par héritage de propriétés et de comportements,
- Le raisonnement en logique des prédicats du premier ordre, par exemple du type dit " Modus Ponens ",
- Le contrôle des raisonnements dirigés par les événements, par exemple par compilation de règles en arbres d'événements binaires,
- La gestion de contraintes temporelles,
- Le traitement du signal, par exemple par filtrage, par segmentation temporelle et/ou spatiale, par identification paramétrique,
- La reconnaissance de forme, par exemple par régression linéaire multiple.

Parmi les outils méthodologiques permettant l'exploitation automatique desdites connaissances, on peut citer des méthodologies de conception de système à base de connaissances, comme le produit logiciel dénommé " OpenKads™", ou des méthodologies de mise au point de bases de connaissances génériques telles que KADS.

Le caractère dynamique du modèle de comportement est obtenu par l'emploi de formalismes intégrant des contraintes temporelles, par exemple en adjoignant des concepts de chroniques et d'événements à la logique des prédicats du premier ordre ; un exemple connu de formalisme de ce type est appelé " DEVS " (" Discrete Event System Spécification " en langue anglaise), qui permet de définir ce qu'on appelle des événements-discrets à partir des entrées $\underline{U}$, de l'état $\underline{X}$, des sorties $\underline{Y}$, de fonctions de transitions internes $\underline{X}$ -> $\underline{X}$, de fonctions de transitions externes $\underline{U} \times \underline{X} \rightarrow \underline{X}$, de fonctions de sortie $\underline{X} \times \underline{U} \rightarrow \underline{Y}$ et de fonctions de durée de vie d'un état.

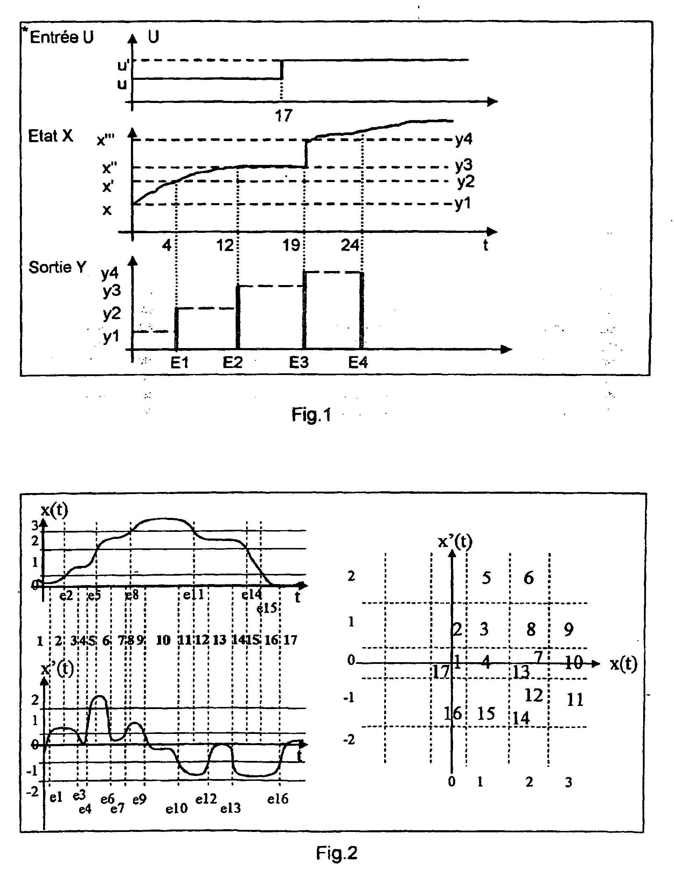

La figure 1 illustre une telle abstraction à événements discrets E1 à E4 d'une relation entrées $\underline{U}$ - sorties $\underline{Y}$.

En résumé, les techniques de résolution de problèmes fournissent les outils technologiques et méthodologiques permettant d'automatiser l'exploitation des connaissances mises en oeuvre par les experts pour conduire un processus complexe et de traduire ces connaissances en un modèle de comportement du processus dynamique complexe.

Comme exemple de processus dynamique complexe, on peut citer : un haut fourneau, un four électrique de production d'acier, un four de production de verre, un four de production de ciment, une installation de laminage.

L'invention a pour but de fournir un procédé et un dispositif capable d'exploiter ce modèle de processus dynamique complexe en vue d'orienter la conduite dudit processus conformément aux objectifs de production de ce processus dans un environnement imparfait.

La logique floue est un moyen classique pour exploiter ce type de modèle de processus dynamique complexe en vue d'orienter la conduite de ce processus vers des objectifs de production, préalablement assignés ou mis à jour ; la logique floue appliquée à ce type de modèle consiste à évaluer un taux d'appartenance de l'état du processus à une ou plusieurs "valeurs symbolique" d'entrée du modèle, à déduire les " valeurs symboliques " de sortie correspondantes, et à calculer l'état du système par pondération de ces valeurs de sortie en fonction des taux d'appartenance correspondants.

Un tel moyen classique permet de rendre plus progressives les transitions entre les différentes branches de raisonnement possibles sur lequel le modèle est basé.

Mais l'inconvénient d'un tel moyen est qu'il conduit à négliger certaines hypothèses de comportement du processus qui peuvent avoir, par exemple exceptionnellement ou à long terme, des conséquences très importantes, par exemple catastrophiques ou au contraire très bénéfiques ; on passe ainsi à côté de phénomènes rares mais d'importance exceptionnelle.

L'invention a pour but d'éviter un tel inconvénient dans le cas de l'utilisation de modèles de processus dynamiques complexes.

En outre, à partir des phénomènes perçus sur la base de l'estimation de l'état du processus dynamique complexe et de son évolution au cours du temps, les buts poursuivis sont également :

- d'alerter sur le caractère " problématique " du comportement courant du processus, en expliquant le problème rencontré,
- d'évaluer la " performance " du processus en rendant compte de la tendance globale à l'amélioration ou à la dégradation des " sorties " du processus par rapport aux objectifs poursuivis,
- de proposer l'engagement d'actions de correction des éventuels comportements "problématiques" ou insuffisamment performants ; l'engagement d'actions correspond par exemple à des changements de réglage des actionneurs et/ou à des modifications des " entrées " du processus.

A cet effet, l'invention a pour objet un procédé de pilotage d'un processus à partir d'informations émises par l'environnement dudit processus et en vue d'adresser des informations aux opérateurs dudit processus de nature à les aider à maintenir ou à ramener ledit processus dans ses objectifs de production, dans lequel :

ayant au préalable défini des phénomène-processus en se basant sur un ou plusieurs critères d'évolution, selon au moins une variable de date et/ou de position, d'au moins une grandeur de perception de l'état dudit processus,

- on acquiert périodiquement lesdites informations émises et on élabore, à partir de ces informations, des valeurs des grandeurs de perception utilisées pour la définition des phénomènes-processus,
- on décrit l'état et l'évolution du processus par une succession de phénomènes-processus détectés,
- et on adresse aux opérateurs des informations concernant les dits phénomènes-processus détectés,

caractérisé en ce qu'il comprend une étape intermédiaire dans laquelle on juge chaque phénomène-processus détecté en fonction d'un contexte propre, lui-même décrit par d'autres phénomènes-processus,
et caractérisé en ce qu'on adresse aux opérateurs lesdites informations concernant le phénomène-processus jugé uniquement lorsque son jugement a établi que ces informations sont nécessaires et opportunes dans ledit contexte pour aider à maintenir ou à ramener ledit processus dans ses objectifs de production.

L'invention - à savoir juger et n'adresser que des messages " opportuns " - permet d'éviter la saturation d'informations des opérateurs et leur permet de consacrer leur attention aux informations les plus pertinentes au moment opportun pour agir sur le pilotage du processus.

L'évolution des grandeurs est intégrée à la base de la définition de chaque phénomène-processus qui sert à décrire l'évolution du processus et son contexte de fonctionnement ; dans un espace, appelé espace d'état, dont les dimensions correspondent à ces grandeurs, l'évolution globale du processus ou son contexte global de fonctionnement, résultant de ladite évolution des grandeurs, peuvent alors être représentés par une trajectoire dont la projection sur chaque dimension correspond à l'évolution de chaque grandeur.

Si les critères portent sur la valeur des grandeurs, ils définissent alors implicitement une trajectoire " type " dans l'espace d'état.

L'invention peut également présenter une ou plusieurs des caractéristiques suivantes :

♦ la description de l'état et de l'évolution du processus et/ou celle de son contexte de fonctionnement comprend des chroniques d'événements, la définition desdits événements intégrant celle d'un ou plusieurs critères d'évolution d'au moins une grandeur de perception et chaque événement étant affecté d'une date et/ou d'une position, et chaque chronique étant formée d'une suite d'événements ordonnée suivant leur date et/ou leur position.
Cette caractéristique additionnelle complète la description de l'état et de l'évolution du processus et/ou de son contexte ; elle un moyen avantageux pour associer des événements très différents et/ou des évolutions à long terme ou à des positions très éloignées.

♦ la définition préalable des phénomène-processus intègre également celle de types de chronique d'événements.
Cette définition plus complète permet de repérer des évolutions sur le long terme et/ou entre des positions très éloignées du processus qui permettent aux opérateurs du processus de le piloter en anticipant ces évolutions ; utilisée pour décrire les contextes, elle permet d'améliorer le jugement et de sélectionner au mieux les informations à adresser aux opérateurs ; les types de chronique d'événements sont appelés ultérieurement « phénomène- signaux ».

♦ la définition des phénomène-processus et/ou des événements intègre également celle d'un ou plusieurs critères d'évolution de la dérivée première d'au moins une grandeur par rapport à une variable de date et/ou de position, cette dérivée étant fonction de cette variable.

Si l'évolution de la dérivée première des grandeurs est intégrée à la définition de certains phénomènes-processus et/ou événements suivant les critères propres à cette caractéristique additionnelle de l'invention, alors, on peut représenter l'évolution de chaque grandeur par une trajectoire dans un espace propre à chaque grandeur, dont les deux dimensions correspondent à cette grandeur et à sa dérivée première, et qu'on appelle " espace de phase ".

Grâce à l'invention, la succession de phénomènes-processus détectés, qui décrit l'état et l'évolution du processus et son contexte de fonctionnement, intègre alors deux représentations : l'une sous forme de trajectoire dans l'espace d'état, l'autre sous forme de trajectoires dans les espaces de phase.

On améliore donc sensiblement la description de l'état et de l'évolution du processus, parce que cette définition plus complète d'un phénomène-processus permet par exemple de distinguer deux phénomènes présentant la même trajectoire dans l'espace d'état mais des trajectoires différentes dans certains espaces de phase.

Utilisée pour décrire les contextes, cette caractéristique additionnelle de l'invention permet également d'améliorer le jugement.

♦ si les valeurs d'une grandeur ou, le cas échéant, de sa dérivée première sont ordonnées selon ladite variable de date et/ou de position pour former un " signal ", pour les critères d'évolution qui portent sur des paramètres calculés à partir de ce signal, à observer uniquement sur un intervalle prédéterminé de valeurs de ladite variable, appelé " échelle d'analyse ", la définition de chacun desdits critères passe par la classification de la valeur calculée de chaque paramètre sur lequel ledit critère porte dans différents sous-domaines prédéterminés du domaine de valeurs de ce paramètre, chaque sous-domaine étant défini par une borne inférieure et une borne supérieure.

Dans le cas où le paramètre est la fonction " identité " et où l'échelle d'analyse ne concerne qu'une valeur de variable, cette définition des critères correspond au partitionnement de l'espace d'état (borne inférieure et borne supérieure pour chaque sous-domaine de valeurs d'une grandeur) et au partitionnement des espaces de phase (borne inférieure et borne supérieure pour chaque sous-domaine de valeurs d'une grandeur et pour chaque sous-domaine de valeurs de la dérivée première d'une grandeur).

♦ certains au moins desdits critères sont déterminés en fonction des objectifs de production dudit processus, et les objectifs de production sont ré-évalués à chaque période d'acquisition desdites informations et lesdits critères remis à jour en conséquence.

Grâce à l'invention selon laquelle, à chaque cycle d'acquisition, on réévalue les objectifs de production par exemple en mettant à jour des " visées " pour chaque grandeur de perception puis on remet à jour les critères qui définissent les phénomènes, le procédé de pilotage s'adapte automatiquement aux changements de conditions ou de contexte d'exploitation du processus et à l'évolution du processus lui-même, par exemple quant à son usure et/ou son vieillissement.

Ainsi, le procédé de pilotage selon l'invention est " réactif au sens qu'il est capable de réagir, de manière autonome, aux modifications de son environnement.

♦ pour déterminer lesdits critères en fonction des objectifs de production, on fait varier ces bornes en fonction de ces objectifs.

■ Enfin, l'invention a également pour l'objet l'utilisation du procédé selon l'invention pour piloter un processus dynamique complexe, ledit processus étant choisi dans le groupe comprenant un haut-fourneau, un four thermique, comme un four de cimenterie, un four à verre ou un four à brames, une installation de coulée continue de métal, et une installation de laminage ou de revêtement en continu de bande métallique.

L'invention sera mieux comprise à la lecture de la description qui va suivre, donnée à titre d'exemple non limitatif, et en référence aux figures annexées sur lesquelles :

- la figure 1 illustre une abstraction à événements discrets E1 à E4 d'une relation entrées U - sorties Y.
- la figure 2 illustre le principe de représentation discrétisée pour une grandeur de perception x(t) et sa dérivée x'(t).

On va maintenant décrire un exemple général de processus complexe, d'installation de pilotage et de mise en oeuvre de cette installation.

Le système à piloter est doté de capteurs ou moyens pour capter les informations qui sont nécessaires à l'estimation de l'état du processus.

Dans le cas d'un haut fourneau, ces informations concernent par exemple :

- la température de la fonte, des gaz au gueulard et en haut de cuve, de la flamme, des parois, notamment aux niveau des staves, des margelles et des réfractaires ;
- la composition chimique des gaz de gueulard, notamment la teneur en CO, CO2, H2, O2, celle de la fonte, notamment la teneur en S, P, Si, Mn, Zn, celle du laitier, notamment la teneur en Fe, Mn, S, MgO, celles des matières enfournées, notamment la teneur en K2O et en fer ferreux ;
- le débit d'azote total et aux tuyères, le débit d'oxygène, la température et le débit du vent chaud, le débit de charbon pulvérisé et le débit d'eau de refroidissement ;
- le poids des matières enfournées, notamment le coke et le minerai, et le poids des matières défournées, notamment la fonte et le laitier ;
- la vitesse des gaz au gueulard, le niveau des charges, la granulométrie des matières chargées, notamment d'agglomérés ;
- la pression en paroi, la pression différentielle en parois,
- la durée des coulées, la durée de coulée sans laitier.

Le système à piloter est doté d'actionneurs dont les valeurs de réglage peuvent être modifées en vue de faire évoluer l'état du processus.

Dans le cas d'un haut fourneau, on peut notamment citer :

- les actionneurs permettant de modifier la mise au mille du coke et la mise au mille du charbon pulvérisé ;
- l'actionneur permettant de modifier le débit total d'oxygène ;
- les actionneurs permettant de modifier la température du vent chaud et sa teneur en humidité ;
- l'actionneur permettant de modifier la contre-pression au gueulard ;
- les actionneurs permettant de modifier la quantité de matières chargées, la composition chimique des matières enfournées, et la répartition radiale de ces matières ;
- les actionneurs permettant de modifier l'épaisseur des couches, duquel dépend le poids de fonte enfournée par cycle de chargement.

Le procédé de pilotage selon l'invention enchaîne de manière cyclique et permanente deux fonctions classiques fondamentales :

- percevoir, c'est à dire estimer l'état de fonctionnement du processus à partir des " sorties " du processus, notamment à partir des informations délivrées par les capteurs ;
- commander, c'est à dire déterminer la valeur de réglage des " entrées " ou actionneurs du processus en fonction de la perception du processus et de manière à satisfaire les objectifs de production du processus ; la satisfaction des objectifs de production consiste à maintenir le processus dans les visées lorsqu'elles sont déjà toutes satisfaites, ou à ramener le processus dans les visées lorsque l'une au moins n'est pas satisfaite.

Le dispositif de pilotage selon l'invention peut être qualifié " d'agent rationnel réactif".

Le mot " agent " désigne un dispositif autonome comprenant :

- des "entrées" organisées sous la forme d'un ensemble de canaux d'informations permettant l'aquisition des informations sur le processus et son environnement,
- des "sorties " organisées sous la forme d'un ensemble d'actions permettant à cet agent d'agir sur son environnement,
- des objectifs de production assignés au processus, organisés sous la forme d'un ensemble de buts externes qui sont également déterminées par son environnement.

Un agent est qualifié de " rationnel " s'il sélectionne effectivement une action à partir du moment où il prend connaissance du fait que cette action peut conduire à satisfaire un de ses buts externes ; de plus, un agent rationnel ne sélectionne aucune action si ses buts externes sont satisfaits.

Le moyen permettant à l'agent rationnel d'appliquer le principe de rationalité réside dans ce qu'on appelle un corpus de connaissances concernant le fonctionnement du processus ; ce moyen, ici le corpus de connaissances, constitue donc le lien entre les canaux d'informations, les buts externes et les actions.

Un agent rationnel est qualifié de " réactif " lorsqu'il est capable de réagir, de manière autonome, aux modifications de son environnement.

Ainsi, dans le mode de réalisation du dispositif de pilotage selon l'invention :

■ Les canaux d'informations véhiculent des "messages" adressés par l'environnement ;

■ Les buts externes sont déclinés en " visées " et chaque " visée " est définie par un intervalle de valeurs définissant un domaine d'évolution des flux de sortie du processus.

■ Les actions résident dans l'émission de messages adressés à l'environnement ; ces messages contiennent une description des problèmes concernant la situation courante par rapport aux visées de production et éventuellement des conseils sur la conduite à suivre pour remédier à ces problèmes ; ils sont accompagnés des informations nécessaires et suffisantes pour " convaincre " l'environnement de l'importance des problèmes et de la pertinence des conseils.

Ainsi, entre autres, ces messages adressés à l'environnement :

■ décrivent l'état du processus et le caractère éventuellement " problématique " de son évolution,

■ indiquent, lorsque cela est possible et nécessaire, les actionneurs dont les réglages sont à modifier et les nouvelles valeurs de réglage proposées,

■ et fournissent, à la demande des opérateurs du processus, des explications sur l'état du processus, le problème rencontré, les réglages à effectuer.

Les destinataires privilégiés de ces messages sont donc des opérateurs de pilotage du processus, qu'il s'agisse d'opérateurs " matériels " automatiques ou d'opérateurs " personnels ", c'est à dire humains.

Concernant le langage et la syntaxe des messages, il convient de préciser :

- que les messages envoyés par l'environnement sont généralement formatés en nombres réels qui représentent généralement la valeur d'une grandeur physique,
- que les raisonnements sont ensuite effectués dans un espace symbolique,
- que les messages émis ensuite vers l'environnement sont libellés dans un langage adapté aux destinataires : langage naturel, symbolique et/ou phénoménologique, comme des phrases accompagnées de graphiques, dans le cas où ces destinataires sont des hommes.

Le dispositif selon l'invention assure donc une conversion numérique-symbolique.

Le dispositif de pilotage selon l'invention est donc adapté pour satisfaire les visées de production du processus, c'est-à-dire :

• Aider à maintenir le processus dans les visées de production lorsque toutes ces visées sont satisfaites ;
• Aider à ramener le processus dans les visées de production lorsque l'une au moins de ces visées n'est pas satisfaite.

Ce dispositif de pilotage fonctionne à la fois d'une manière synchrone et asynchrone :

■ Fonctionnement synchrone pour l'acquisition des informations, basé sur une acquisition périodique des messages adressés par l'environnement ;

■ Fonctionnement asynchrone pour l'émission des messages adressés à l'environnement au sens où ces messages ne sont adressés que lorsqu'ils sont nécessaires pour maintenir ou ramener le processus dans les visées.

Avantageusement, puisque les messages ne leur sont adressés que lorsqu'ils sont nécessaires, les opérateurs sont beaucoup moins saturés que dans les procédés de l'art antérieur et peuvent se consacrer aux informations les plus importantes de ces messages ; de plus, le procédé est adapté pour que les messages soient émis en temps opportun, et, lorsque c'est opportun, le plus tôt possible.

Lors d'un cycle d'acquisition d'informations, il arrive donc fréquemment qu'aucun message d'action ne soit émis.

Le procédé selon l'invention comprend au moins les deux premières étapes parmi les quatre étapes principales cycliques suivantes :

- percevoir, c'est à dire évaluer l'état du processus et son évolution à partir d'informations, notamment celles délivrées par les capteurs ;
- juger ou qualifier en terme de gravité la perception en fonction du contexte de fonctionnement du processus, et émettre un message selon le jugement effectué ; ainsi, un état ou une évolution du processus sont jugés " problématiques " s'ils ne permettent pas de satisfaire les objectifs de production et un message les concernant est alors émis s'il convient de modifier les réglages des actionneurs pour maintenir ou ramener le processus dans les visées de production ;
- corriger : cette fonction est destinée, le cas échéant, à quantifier les modifications nécessaires des valeurs de réglage des actionneurs pour satisfaire ou maintenir les objectifs de production et à planifier ces modifications dans le temps ;

- collaborer : cette fonction assure la communication et l'interface vers les opérateurs du processus : adaptation des messages délivrées par le dispositif selon l'invention en fonction des opérateurs de pilotage auxquels elles sont destinées et en fonction du contexte de fonctionnement du processus.

Seule la fonction "percevoir" est synchronisée avec les informations transmises par les capteurs ; les autres fonctions sont activées de manière asynchrone : la fonction " juger " est activée dès que la fonction " percevoir " détecte un " phénomènes", la fonction " corriger " est activée lorsque la fonction " juger " a déterminé que l'état du processus était " problématique ", et la fonction " collaborer " est activée soit à l'initiative des opérateurs de pilotage, soit à celle du dispositif lorsque cela est nécessaire.

Selon l'invention, la première **FONCTION PRINCIPALE " PERCEVOIR "** comprend essentiellement les étapes suivantes :

1 - élaboration des valeurs de grandeurs de perception de l'état du processus et élaboration de signaux, les signaux étant des ensembles numériques ordonnées de valeurs de ces grandeurs,

2 - description de l'évolution de l'état du processus par une trajectoire dans l'espace d'état et des trajectoires dans l'espace de phase relatif à chaque grandeur, et discrétisation de ces trajectoires par partitionnement des espaces,

3 - description de l'évolution de l'état du processus sur la base de l'évolution des grandeurs de perception elles-mêmes, sous la forme d'une chronique globale d'événements concernant ces grandeurs ; ces chroniques peuvent être temporelles, spatiales, ou spatio-temporelles ; on définira deux types d'événements : les événements-discrets et les événements-signaux,

4 - description de l'évolution de l'état du processus en répérant, dans une chronique globale d'événements, des typologies de chroniques globales, qu'on appelle " phénomènes-signaux ",

5 - description de l'évolution de l'état du processus sous la forme d'une chronique de phénomène-processus, la définition d'un phénomène-processus intégrant les points 2, 3 et 4 ci-dessus.

Ces cinq étapes sont décrites plus en détail ci-après.

La PREMIERE ETAPE de la PERCEPTION consiste à construire et à ordonner les valeurs prises au cours du temps par des grandeurs qui permettent de décrire l'état du processus.

Le dispositif selon l'invention distingue deux types de grandeurs selon l'utilisation qu'il en fait :

• Les grandeurs mesurées : une grandeur mesurée est soit une grandeur dont les valeurs sont acquises directement à partir des capteurs instrumentant le processus, soit une grandeur dont les valeurs sont calculées à partir de celles d'autres grandeurs sur la base de modèles mathématiques numériques.

• Les grandeurs de perception : les grandeurs de perception sont les grandeurs mesurées qui contiennent l'information sur l'état du processus et son évolution au cours du temps, c'est à dire $X(t)$ et $X'(t)$ tels que précédemment définis ; les valeurs de ces grandeurs ne sont généralement pas directement mesurables et sont calculées ou déduites comme indiqué ci-dessous ; les grandeurs de perception forment donc les composantes de ce qu'on appelle couramment un vecteur d'état $\underline{X}$ du processus dans l'espace d'état à n dimensions, n correspondant au nombre de grandeurs de perception.

Les valeurs de ces grandeurs sont obtenues à partir de l'interprétation des informations disponibles concernant le processus, notamment les informations transmises par les capteurs ; " Valeur " est un réel donnant en général l'amplitude de la grandeur ou un entier indicatif, par exemple, d'un caractère vrai/faux porté par la grandeur (i.e. une valeur binaire).

On peut ordonner les " Valeurs " prises par une grandeur d'une manière spatiale ou/et d'une manière temporelle.

On va d'abord décrire un ordonnancement de type temporel de valeurs d'une grandeur, dans le cas, par exemple, où ces valeurs transitent sur un " bus " de données ; pour la datation des " Valeurs ", on peut alors utiliser un système classique de gestion du " bus ", qui est externe au dispositif selon l'invention et prend donc en compte différentes horloges, parfois indépendantes les unes des autres ; ainsi, à chaque " Valeur " est attribuée une " Datevaleur" cette datation est indépendante des horloges propres au dispositif selon l'invention.

On distingue trois modalités temporelles principales de datation des valeurs selon les types de grandeurs :

• Grandeurs périodiques, lorsque que la durée s'écoulant entre deux valeurs successives prises par cette grandeur est constante au cours du temps ; la notion de grandeur périodique est donc associée à celle de période d'échantillonnage et de fréquence d'échantillonnage de cette grandeur ; la " Datevaleur" associée aux " Valeurs " d'une grandeur périodique est donc un multiple entier de la période d'échantillonnage et ces " Datevaleur" sont interprétées par le dispositif selon l'invention comme des valeurs d'une grandeur appelée " temps universel ".

- Grandeurs événementielles, qui ne sont ni périodiques, ni apériodiques ; les " Valeurs " des grandeurs événementielles ne sont donc connues qu'à des dates particulières et la " Datevaleur" est alors attribuée selon des modalités spécifiques, en référence à des horloges quelconques : il peut s'agir par exemple de la date de prise d'un échantillon, celle de l'analyse de l'échantillon, celle de la validation de la saisie des valeurs de l'analyse ; dans ces trois exemples, les horloges peuvent être par exemple la montre d'un opérateur, une horloge murale ou celle d'un terminal de saisie.

Les dates associées aux grandeurs événementielles ne sont donc pas interprétées en tant que mesure du " temps universel ", mais comme des index permettant d'ordonner une suite de "Valeurs" de ces grandeurs événementielles.

- Grandeurs apériodiques, lorsque que le nombre de " Valeurs " que cette grandeur prend sur une durée prédéterminée est constant au cours du temps ; il s'agit d'un cas particulier de grandeurs événementielles pour lesquelles on garantit un nombre constant de mesures ou de " Valeurs " pendant cette durée prédéterminée, durant le fonctionnement du processus ; la " Datevaleur" associée aux valeurs des grandeurs apériodiques possède les mêmes propriétés que celles des grandeurs événementielles.

La nécessité de la distinction apériodique/événementielle se fonde sur le fait que la " Datevaleur" s'interprète généralement par rapport à des objets physiques ayant une durée de vie finie ; la durée de vie de chacun de ces objets définissant un intervalle de temps, les dates attribuées aux valeurs des grandeurs apériodiques peuvent être attribuées à ces objets, et ordonnés à l'intérieur des intervalles de temps correspondant à leur durée de vie.

Par conséquent, la " Datevaleur" associée aux valeurs des grandeurs apériodiques est interprétée comme une mesure d'une grandeur particulière mesurant un " temps relatif " à un objet à durée de vie finie ; la chronologie globale est assurée par celle des objets eux-mêmes.

L'environnement du dispositif selon l'invention pouvant exploiter de multiples horloges de nature différente, il indispensable d'ordonner les valeurs de grandeurs comparables ; cela signifie que deux " Datevaleur" différentes associées à des grandeurs différentes mais comparables, correspondent à des dates différentes.

On va maintenant décrire un ordonnancement de type spatial de valeurs d'une grandeur, dans le cas, par exemple, du pilotage d'un haut-fourneau ; si la grandeur concerne la température de paroi, chaque valeur de cette grandeur correspond à un point donné de cette paroi, qu'on appelle " Point d'Acquisition " repéré par une " Position" un ensemble de " Points " forme une "Zone".

Ces " Points" forment un ensemble dont la structure est liée, par exemple, à l'implantation des capteurs dans le système et cet ensemble peut être ordonné ; dans le cas des températures de parois d'un haut-fourneau, ils peuvent être ordonnés par exemple selon leur " position " sur un diamètre de paroi et/ou selon leur " position " en hauteur sur cette paroi ; l'ordonnancement de cet ensemble de " Points " permet alors d'ordonner les " Valeurs " relatives à ces " Points " selon une suite ordonnée de couples " Valeurs "-" Position " qui forme un signal spatial.

Enfin, l'ordonnancement des " Valeurs" peut être à la fois spatial et temporel, c'est à dire spatio-temporel ; la suite ordonnée de couples ou de triplets correspondante forme alors un signal spatial.

Par ailleurs, le procédé selon l'invention est " cadencé " selon une période dite d'acquisition ; à chaque début de cycle de mise en oeuvre du procédé selon l'invention, on acquiert donc des informations concernant le processus - couples "Valeur"-"DateValeur" ou couples " Valeur "-" PositionValeur ", ou triplets " Valeur "-" DateValeur "-" PositionValeur " ; à chaque " information ", on associe une " DateAcquisition " qui correspond par exemple au numéro de cycle compté depuis la dernière initialisation du dispositif.

Le repérage de " DateAcquisition " par le numéro de cycle introduit, de fait, une discrétisation du temps.

Chaque " donnée " est alors un triplet ou quadruplet "Valeur"-" DateValeur"- " DateAcquisition ", ou " Valeur "-"PositionValeur"-" DateAcquisition ", ou " Valeur "-" DateValeur "-" PositionValeur "-" DateAcquisition ".

On stocke ces données dans une base de données indexée suivant la " DateAcquisition ".

Chaque valeur d'une grandeur est donc liée à deux dates et/ou à une date et une position :

- une DateAcquisition, pour l'indexation du stockage des données,
- une DateValeur, pour ordonner les suites numériques de " Valeurs " d'une même grandeur et définir ainsi le signal temporel d'une grandeur,
- une Position de Point d'acquisition, pour ordonner les suites numériques de " Valeurs " d'une même grandeur et définir ainsi le signal spatial d'une grandeur,
- une DateValeur et une Position pour ordonner les suites numériques de " Valeurs " d'un ensemble de grandeurs de même nature, comme par exemple les températures mesurées sur les parois d'un haut-fourneau,et définir ainsi le signal spatio-temporel associé à cet ensemble de grandeurs de même nature.

Dans la suite du procédé, on cherche à décrire l'évolution du processus à la fois :

- à l'aide d'une suite globale consolidée des " Valeurs " de toutes les grandeurs, ordonnée suivant la DateAcquisition,
- à l'aide des signaux des grandeurs, chaque signal est alors défini comme une suite ordonnée des " Valeurs " d'une même grandeur.

Ce système de gestion des données selon un double indexage permet avantageusement au dispositif selon l'invention de raisonner en temps continu et de gérer ses données numériques selon les modalités d'un système à temps discret.

La DEUXIEME ETAPE de la PERCEPTION consiste à décrire l'évolution du processus à la fois :

- par la trajectoire " discrétisée " que suit l'état du processus dans l'espace d'état, tel qu'elle découle de la suite globale consolidée des " Valeurs " de toutes les grandeurs,
- et par les trajectoires " discrétisées " que suivent les valeurs des grandeurs dans leur espace de phase, telles qu'elles découlent des signaux propres à chaque grandeur, qu'ils soient temporels, spatiaux, ou spatio-temporels.

La " discrétisation " des trajectoires dépend des visées ou des objectifs de production, et passe par un partitionnement de l'espace d'état et des espaces de phase en fonction de ces " visées " ; selon l'invention, ce partitionnement est effectuée à chaque cycle d'acquisition des informations.

On définit l'espace d'état comme un espace dont les dimensions sont les grandeurs de perception et dans lequel on représente un état du processus par un vecteur d'état $\underline{X(t)}$ dont les composantes sont les " Valeurs " des grandeurs de perception correspondant à cet état ; si toutes ces " Valeurs " sont définies dans $\mathfrak{R}$ , l'espace d'état est défini dans $\mathfrak{R}^n$ , où n est le nombre de composantes du vecteur d'état X ; les coordonnées d'un point de l'espace d'état sont les " Valeurs " des grandeurs de perception de l'état décrit par ce point.

On peut décrire l'évolution du processus par une succession d'états représentés par des points dans l'espace d'état, succession qui forme une trajectoire d'évolution du processus dans cet espace ; cette trajectoire d'évolution du processus possède une projection sur chacune des dimensions de l'espace d'état ; cette projection correspond aux valeurs successives d'une grandeur de perception au cours de l'évolution du processus représenté par la trajectoire.

Le partitionnement ou " discrétisation " de l'espace d'état doit être réalisé en sous-ensembles d'états qui correspondent chacun à un type d'état déterminé de telle sorte que l'on puisse ainsi repérer chaque état du processus non plus par son vecteur d'état $\underline{X}$ mais par le sous-ensemble d'états ou type d'état auquel cet état appartient.

Grâce à ce partitionnement, la représentation de l'évolution du processus peut être également " discrétisée" on passe d'une représentation par une trajectoire d'évolution " continue " à une représentation par une succession de changements de types d'états, qu'on appelle " trajectoire discrétisée " d'évolution du processus.

Pour le partionnement de l'espace d'état, on définit donc un nombre fini et dénombrable de sous-ensembles de cet espace.

Selon une caractéristique de l'invention, ce partionnement est effectué en fonction des objectifs de production assignés au processus à chaque cycle d'acquisition des informations concernant le processus.

A partir des objectifs de production assignés au processus, exprimés par exemple en critères quantitatifs et qualitatifs que doivent satisfaire certains des flux " entrants " et " sortants " du processus, et à l'aide du corpus de connaissances concernant le comportement du processus, on définit des " visées " pour les grandeurs de perception, de sorte que, si un état du processus est défini par des valeurs de grandeurs de perception qui appartiennent à ces visées respectives, cet état est jugé comme satisfaisant les objectifs de production.

A chaque cycle d'acquisition, on remet donc à jour les " visées " et on effectue donc à nouveau le partitionnement de l'espace d'état en fonction des nouvelles " visées ".

Pour une grandeur dont les valeurs sont des nombres réels, une " visée " correspond à un intervalle délimité par des bornes inférieure "ValeurInf" et supérieure " ValeurSup", qui est représenté par exemple par [ValeurInf, ValeurSup] ; parfois, les valeurs des bornes sont fixées par des valeurs de seuils.

La définition de ces " visées " et/ou celle des bornes de ces intervalles est réalisée par les opérateurs de conduite du procédé, notamment en fonction de l'expérience ; les valeurs des bornes peuvent être constantes ou être fonction de valeurs d'autres grandeurs et de valeurs d'autres bornes ; il n'est pas toujours possible de définir un " intervalle de valeurs satisfaisantes " ou des valeurs de bornes pour chaque grandeur de perception.

Ainsi, sur les dimensions de l'espace d'état, la partition peut s'effectuer en trois parties :

$$[-\infty, \text{ValeurInf}[ \, , \, [\text{ValeurInf}, \text{ValeurSup}], \, ]\text{ValeurSup}, +\infty].$$

L'ensemble des sous-ensembles [ValeurInf, ValeurSup] propres à chaque dimension définit un " hyper-cube " dans l'espace d'état.

Un état donné du processus peut donc être considéré comme appartenant ou non à cet hypercube, selon qu'il satisfait ou non les objectifs de production du processus.

La finesse dans le partitionnement de l'espace d'état continu peut cependant nécessiter la définition d'un nombre plus important de sous-ensembles.

Le partitionnement de l'espace d'états définit donc, à chaque cycle d'acquisition et pour chacune des composantes du vecteur d'état continu, des intervalles de valeurs dans $\Re^n$, et associe à chaque intervalle de valeurs un entier relatif ; l'espace d'état partitionné est donc un espace défini sur $Z^n$.

On définit l'espace de phase à partir d'un signal, c'est à dire à partir d'une suite de valeurs d'une même grandeur ordonnée selon une variable, comme le temps dans le cas d'un signal temporel ou comme la position dans le cas d'un signal spatial ; par définition, cet espace ne présente que deux dimensions, la première correspondant à la valeur de la grandeur, la seconde correspondant à la dérivée de cette valeur en fonction de la variable ; l'espace de phase est donc propre à une grandeur de perception et il existe donc au moins autant d'espaces de phase que de grandeurs de perception.

Ainsi, dans le cas où la variable est le temps, pour un état du processus repéré dans l'espace d'état par un vecteur d'état $\underline{X}$ dont les composantes sont $X_1(t)$, $X_2(t)$, ..., $X_i(t)$, ... $X_n(t)$, chaque composante représente la " Valeur " = $X_i(t)$ de la grandeur de perception correspondante $G_i$ à l'instant t.

A partir du signal temporel d'une grandeur G, formée par une suite de " Valeurs " de cette grandeur ordonnées suivant leur " Datevaleur", et à laquelle X(t) appartient, on peut calculer la dérivée première X'(t) de la valeur X(t).

X(t) et X'(t) déterminent alors les coordonnées d'un point dans l'espace de phase de cette grandeur ; au cours d'un changement de comportement de cette grandeur, l'ensemble des valeurs prises par le couple (X(t), X'(t)) et la succession des points correspondants forme une trajectoire de comportement de cette grandeur.

On peut ainsi décrire le comportement d'une grandeur par une trajectoire " continue " dans le plan de phase associé à cette grandeur ; pour décrire ce comportement par une trajectoire " discrétisée ", on va procéder au partitionnement de l'espace des phases.

Le partitionnement ou " discrétisation" de l'espace de phase d'une grandeur doit être réalisé en sous-ensembles qui correspondent chacun à un type déterminé de telle sorte que l'on puisse ainsi repérer la " Valeur " d'une grandeur du processus non plus par les valeurs (X(t), X'(t)) mais par le sous-ensemble auquel le point correspondant appartient.

Pour le partionnement de l'espace de phase, on définit donc un nombre fini et dénombrable de sous-ensembles de cet espace ; on peut partitionner l'espace de phase selon une méthode comparable à celle précédemment décrite pour le partionnement de l'espace d'état, en reprenant, pour la première dimension correspondant à la valeur de la grandeur, les mêmes " visées ".

Selon une caractéristique de l'invention, ce partitionnement est également effectué à chaque cycle d'acquisition en fonction des objectifs de production déjà cités pour le partionnement de l'espace d'état.

Chaque point de l'espace de phase d'une grandeur peut être affecté à un des sous-ensembles de cet espace ; la représentation par affectation constitue alors une représentation discrétisée de la valeur des grandeurs.

La figure 2 illustre ce principe pour une grandeur de perception x(t) et sa dérivée x'(t), c'est à dire pour une composante d'un vecteur d'état, qui évoluent en fonction du temps comme illustré dans la partie gauche de la figure ; la représentation discrétisée qu'on en déduit figure dans la partie droite.

Grâce à ce partitionnement, la représentation du comportement d'une grandeur peut ensuite être "discrétisée" on passe d'une représentation par une trajectoire " continue " à une représentation par une succession de changements de types, qu'on appelle " trajectoire discrétisée " de comportement d'une grandeur.

Grâce à l'invention selon laquelle, à chaque cycle d'acquisition, on met à jour les " visées " pour chaque grandeur de perception puis on renouvelle le partitionnement de l'espace d'état et celui des espaces de phase, le procédé de pilotage s'adapte automatiquement :

- aux changements de conditions ou de contexte d'exploitation du processus, tels le changement de point de fonctionnement ou le changement de la nature des flux de matière ou d'énergie,
- et à l'évolution du processus, relatif par exemple à l'usure, au vieillissement, ou à l'endommagement d'organes de ce processus.

Ainsi, le procédé de pilotage selon l'invention est " réactif " au sens qu'il est capable de réagir, de manière autonome, aux modifications de son environnement.

Ici, deux aspects de l'invention méritent d'être soulignés et distingués en tant que conséquences du partionnement : la réactivité, produite par la détection des événements discrets, et l'adaptativité produite par un partionnement fondé sur des visées numériques remises à jour ; ces deux propriétés apportent des avantages importants par rapport à l'approche de logique floue de l'art antérieur.

Selon une caractéristique de l'invention, on " perçoit " donc l'évolution du processus non seulement par sa trajectoire dans l'espace d'état mais également par la trajectoire de chacune des grandeurs de perception dans leur espace de phase.

Ce double mode de perception, à la fois dans l'espace d'état et dans les espaces de phase, est en effet particulièrement pertinent car une trajectoire dont la projection est nulle selon une dimension correspondant à une grandeur de perception de l'espace d'état ne correspond pas forcément à un point dans l'espace de phase de cette grandeur ; cela signifie que, si l'évolution d'un processus possède une " traduction " vide signifiant l'absence d'évolution dans l'espace d'état, sa " traduction " n'est pas forcément vide dans les espaces de phase, au niveau du comportement de chacune de ses grandeurs de perception (et vice-versa).

L'évolution d'un processus (trajectoire dans l'espace d'état) et le comportement de ses grandeurs de perception (trajectoire dans l'espace de phase) sont bien évidemment liés mais la relation qui les lie est particulièrement difficile à établir dans le cas des processus dynamiques complexes ; l'invention permet de pallier cette difficulté, notamment grâce à la troisième, quatrième et cinquième étape de perception.

La TROISIEME ETAPE de la PERCEPTION consiste à décrire l'évolution du processus sur la base de l'évolution des grandeurs de perception elles-mêmes, sous la forme de chroniques d'événements concernant ces grandeurs ; ces chroniques peuvent être temporelles, spatiales, ou spatio-temporelles.

On appelle " chronique " temporelle une suite de couples (Evt, DateEvt) où " Evt " désigne un événement concernant une grandeur et " DateEvt " désigne la date affectée à cet événement ; on appelle " chronique " spatiale une suite de couples (Evt, PositionEvt) où " PositionEvt " désigne la position affectée à cet événement ; on appelle " chronique "spatio-temporelle une suite de triplets (Evt, DateEvt, PositionEvt).

Pour aboutir à ces chroniques, il convient donc de définir des événements, leur mode de détection et leur mode de datation et/ou de localisation.

On va maintenant définir un premier type d'événements ; les " événenements-discrets ".

Par défintion, on génère un " événement-discret " concernant une grandeur de perception lorsque l'évolution du processus provoque un changement de sous-ensemble auquel appartient le point représentatif courant de cette grandeur dans son espace de phase selon la définition des sous-ensembles et celle du partitionnement de l'espace de phase ci-dessus.

A un événement-discret donné qui correspond au passage d'un sous-ensemble à un autre, est alors attribuée la date de ce passage : par exemple, en se reportant à la figure 6, à l'événement-discret $E_1$ qui correspond au passage du sous-ensemble 1 au sous-ensemble 2, est attribuée la date $e_1$.

Ainsi, le comportement de chaque grandeur peut être décrit par une suite de couples (Evt, DateEvt) qui forme une chronique d'événements-discrets de cette grandeur ; la figure 6 illustre ce principe pour une grandeur de perception.

On va maintenant décrire la définition des événements-signaux.

On a vu précédemment qu'une suite numérique ordonnée de " Valeurs " d'une même grandeur définissait le signal, ce signal pouvant être temporel, spatial, ou spatio-temporel.

Par l'analyse de ce signal, on va repérer le comportement de la grandeur associée à ce signal et générer un " événement-signal " à chaque changement de comportement.

Selon l'invention, à cette fin, on définit des classes de comportement, une méthode pour reconnaître le comportement d'une grandeur de manière à l'affecter ou non à l'une de ces classes et une méthode de datation du changement de classe de comportement ; selon ces définitions et méthodes, on peut générer et dater un événement-signal à chaque changement de classe de comportement, et aboutir ainsi à une chronique d'événements-signaux (Evt,DateEvt).

La mise en oeuvre d'une méthode de reconnaissance de comportement peut nécessiter de configurer le signal présentant ledit comportement ; il est alors nécessaire d'ajouter en amont une méthode de filtrage du signal, adaptée à la méthode utilisée.

Les classes de comportement peuvent être paramétrées d'une manière constante ou variable : selon l'exemple cité ci-après, ces paramètres concernent en particulier les contraintes concernant chaque modèle et ses échelles d'analyse.

L'exemple suivant illustre l'invention pour la définition des événements-signaux et leur mode de datation :

Pour chacune des grandeurs de perception, on définit plusieurs modèles de comportement possibles ; chaque modèle de comportement peut être représenté par un type de trajectoire dans l'espace de phase de cette grandeur ; chaque modèle de comportement et/ou chaque type de trajectoire définit donc ici une classe de comportement.

On génère alors un événement-signal pour une grandeur donnée dès que l'on détecte une des conditions suivantes :

1. Reconnaissance de l'établissement d'un modèle de comportement,
2. Reconnaissance de l'achèvement d'un modèle de comportement préalablement reconnu,
3. Incapacité à reconnaître un modèle de comportement.

Pour détecter ces conditions, on peut par exemple utiliser l'une des deux méthodes de génération décrite ci-après :

- Une méthode par analyse du signal adaptée pour reconnaître le comportement d'un signal par rapport à un ensemble de modèles de comportement temporel de référence et selon une échelle temporelle d'analyse donnée du signal ; un modèle de comportement temporel correspond à un ensemble de contraintes portant sur un segment temporel de signal prédéterminé ; une échelle temporelle d'analyse correspond au segment temporel nécessaire à l'analyse du signal pour reconnaître le modèle de comportement ; de ce fait, le segment temporel de définition du comportement du signal d'une grandeur est d'une durée inférieure à l'échelle temporelle d'analyse.
- Une méthode de reconnaissance de formes temporelles adaptée pour reconnaître le comportement courant d'un signal par rapport à un ensemble de modèles de formes temporelles de référence et selon une échelle d'observation donnée ; une forme temporelle est un ensemble de contraintes portant sur un assemblage de modèles de comportements temporels ; dans le cas de l'utilisation de cette méthode, l'échelle temporelle d'analyse est au moins égale à la somme des échelles temporelles d'analyses associées aux modèles de comportement temporels composant le modèle de la forme temporelle à reconnaître.

Il convient ensuite de définir une méthode de datation de l'événement-signal ; dans le cas des signaux temporels, un exemple simple de cette méthode consiste à déterminer la donnée (triplet ou quadruplet défini ci-dessus) du signal qui est à l'origine de la génération de l'événement-signal " Evt " et à affecter la " Datevaleur" de cette donnée à la " DateEvt " associée à cet événement-signal ; dans le cas de l'utilisation de modèles pour définir les classes de comportement, la méthode de datation dépend du modèle de comportement retenu et la recherche de la donnée du signal qui est à l'origine de la génération de l'événement-signal est effectuée sur l'échelle d'analyse associée à ce modèle.

Comme pour les événements-dicrets, le comportement de chaque grandeur est alors aussi décrit par une suite de couples (Evt, DateEvt) qui forme une chronique d'événements-signaux de cette grandeur ; la figure 6 illustre ce principe pour une grandeur de perception ; cette description du comportement de chaque grandeur est liée à la définition des classes de comportement de cette grandeur, par exemple sous forme de modèles ou de types de trajectoire, de la même façon que la description de comportement basée sur les événements-discrets est basée sur le partionnement de l'espace de phase de cette grandeur.

Globalement, on aboutit à une série de suites de couples (Evt, DateEvt) où Evt désigne soit un événement-discret soit un événement-signal, c'est à dire à une série de chroniques d'événements concernant cette grandeur.

Pour décrire l'évolution du processus, ces chroniques peuvent être agrégées en une seule chronique globale d'événements.

On effectue cette agrégation en rassemblant et en agrégeant les chroniques (Evt, DateEvt) de chaque "Grandeur "; on aboutit alors à une suite de triplets (Evt, DateEvt, Grandeur) ; ces triplets constituent une chronique globale d'événements qui décrit l'évolution du comportement d'ensemble des grandeurs ; de préférence, cette chronique globale est ordonnée selon les valeurs " DateEvt " de chaque triplet.

Ce principe permet d'associer à toute évolution temporelle d'un processus continu une chronique globale d'événements, dont chaque événement correspond à un changement de type de comportement d'une grandeur (événement-signal) ou à un changement de sous-ensemble observé dans l'espace de phase d'une grandeur (événement-discret).

Selon une caractéristique de l'invention, on prend donc en compte le comportement des grandeurs de perception pendant l'évolution du processus sous la forme d'une chronique globale d'événements, chaque événement de cette chronique concernant l'évolution d'une de ces grandeurs.

La QUATRIÈME ÉTAPE de la PERCEPTION vise à décrire l'évolution du processus en repérant, dans une chronique globale d'événements, des typologies de chroniques globales, qu'on appelle " phénomènes-signaux " parce que les événements de ces chroniques sont détectés à partir de l'observation de signaux.

Il s'agit donc de définir les phénomènes-signaux, leur mode de détection et de datation ; on définit en outre un moyen de qualification de ces phénomènes-signaux.

On définit les phénomènes-signaux par des types de chroniques globales d'événements concernant l'évolution du processus, chaque type de chronique rassemblant des événements-discrets et/ou des événements-signaux d'une même grandeur ou de grandeurs différentes ; un événement-signal d'un type de chronique peut être temporel, spatial ou spatio-temporel, comme précédemment décrit.

Un type de chronique est donc paramétré et caractérisé par :

- la définition de chaque événement " Evt " qui le compose, et qui, dans le cas des événements signaux, intègre des contraintes concernant la forme du signal d'une grandeur,
- la date et/ou la position de ces événements et l'intervalle de temps ou de position qui les sépare, qui intègre la valeur " DateEvt " et/ou " PositionEvt " de chaque événement, et des contraintes temporelles ou spatiales relatives au séquencement ou au positionnement des événements.

Un type de chronique qui ne contient que des événements-signaux temporels correspond à un phénomène-signal dit " temporel " ; un type de chronique qui ne contient que des événements-signaux spatiaux correspond à un phénomène-signal dit " spatial " ; un type de chronique qui contient à la fois des événements-signaux temporels et spatiaux correspond à un phénomène-signal dit "spatio-temporel".

La reconnaissance ou détection des phénomènes-signaux consiste alors à identifier à quel type de chronique la chronique globale d'événements concernant l'évolution du processus appartient ; on génère donc un phénomène-signal à chaque fois que l'on reconnaît, dans la chronique globale d'événements concernant l'évolution du processus, un type de chronique d'événements prédéfini.

Il convient ensuite de définir avec précision une méthode de datation du début ("DateDébutPhénomène-signal") et de fin (" DateFinPhénomène-signal") du phénomène-processus ou du phénomène-signal ; pour cette datation, dans le mode de réalisation décrit, on attribue :

- à " DateDébutPhénomène-signal " la valeur " DateEvt " de l'événement-discret ou de l'événement-signal le plus ancien de la chronique correspondant au type de chronique reconnu ;
- à " DateFinPhénomène- signal " la valeur " DateEvt" de l'événement-discret ou de l'événement-signal le plus récent de la chronique correspondant au type de chronique reconnu ;
- à "DateDétectionDébut " la valeur donnée par l'horloge interne du dispositif selon l'invention au moment de la détection ou de la reconnaissance du phénomène-signal,
- à " DateDétectionFin " la valeur donnée par la même horloge interne au moment de la fin de détection ou de la fin de reconnaissance du phénomène-signal.

On définit donc en outre un moyen de qualification des phénomènes-signaux.
Les phénomènes signaux sont qualifiés en fonction :

■ De ce que l'on appelle leur amplitude ; l'amplitude d'un phénomène-signal est une mesure de l'écart de comportement par rapport au comportement de référence souhaité ; s'il s'agit d'un phénomène-signal temporel ou spatio-temporel, l'amplitude correspond à une étiquette associée à la partie de l'espace d'état partitionné à l'origine de la détection d'un événement signal participant à la détection du phénomène-signal considéré.
■ De ce que l'on appelle leur localisation ; la localisation des phénomène-signaux est portée par la liste des grandeurs sur lesquelles un comportement particulier est observé ; s'il s'agit d'un phénomène-signal temporel, cette liste ne contient que la grandeur de perception associée au phénomène-signal ; s'il s'agit d'un phénomène-signal spatial ou spatio-temporel, cette liste contient l'ensemble des grandeurs à l'origine de la détection du phénomène-signal ; plus précisément, cette liste détermine la zone géographique du processus concernée par le phénomène-signal.

Les étiquettes sont des chaînes de caractères contenant des adjectifs qualifiant notamment l'ampleur du phénomène, sa rapidité ou son caractère asymétrique, par exemple :

■ Qualification d'amplitude :

■ Si le phénomène-signal concerne des modifications temporelles de grandeurs assimilées à des droites croissantes ou décroissantes, les qualificatifs possibles du phénomène-signal sont : " Très forte hausse ", " Forte hausse ", " Hausse ", " Baisse ", " Forte baisse ", " Très forte baisse ".
■ Si le phénomène-signal concerne des modifications temporelles de grandeurs assimilées à des niveaux, , les qualificatifs possibles du phénomène-signal sont : " Très élevé ", "Elevé", " Bas ", " Très bas ".

■ Qualifications de rapidité :

■ Si le phénomène-signal concerne des modifications temporelles de grandeurs assimilées à des droites croissantes ou décroissantes, les qualificatifs possibles du phénomène-signal sont : " Hausse très brutale", " Hausse brutale", " Hausse rapide ", " Hausse ", " Baisse ", " Baisse rapide ", " Baisse brutale ", " Baisse très brutale ".

■ Qualification de l'asymétrie :

■ Asymétrie temporelle :

" Très irrégulier ", "Irrégulier", "Constance ".

■ Asymétrie spatiale :

" Dissymétrique ", " Fortement hétérogène ".

La CINQUIÈME ÉTAPE de la PERCEPTION vise à décrire l'évolution du processus en intégrant tous les éléments développés ci-dessus pour décrire l'évolution du processus.

A cette fin, on va d'abord définir des " phénomènes-processus " ou " Ph-Pr " en intégrant tous ces éléments, pour être en mesure de décrire l'évolution du processus par une suite ou chronique de " phénomènes-processus ".

La définition des " phénomènes-processus " doit donc intégrer tous les éléments décrits ci-dessus susceptibles de décrire l'évolution du processus à partir des signaux temporels, spatiaux, spatio-temporels des grandeurs, à partir de la trajectoire de chaque grandeur dans son espace de phase, et à partir de la trajectoire, continue ou "discrétisée", d'évolution du processus dans l'espace d'état.

L'intégration de tous ces éléments permet d'aboutir à une description plus complète et à une perception plus pertinente de l'évolution du processus qui permet d'améliorer sensiblement le pilotage du processus.

Ce problème d'intégration et d'agrégation de différents moyens pour décrire l'évolution du processus peut être également illustré de la manière suivante : les grandeurs X de description de l'état du processus obéissent à deux types de lois classiques de comportement :

- 1ère loi : $X = f(t, x)$, où $t$ est la date ou le temps, et $x$ la position ;
- 2ème loi : $f'(X, dX/dt, dX/dx) = 0$, équation différentielle du premier ordre.

La première loi correspond aux descriptions précédentes dans l'espace d'état par un vecteur d'état dont les composantes sont les grandeurs X et par une trajectoire de ce vecteur dans cet epace, alors que la deuxième loi correspond aux descriptions précédentes dans les espaces de phase de chaque grandeur X.

Le problème résolu par l'invention est d'intégrer et d'agréger ces deux lois de comportement des grandeurs dans le cas d'un processus dynamique complexe.

Afin de résoudre ce problème, on définit donc d'abord un phénomène-processus par une " signature ", c'est à dire par un " type de trajectoire ", continue ou " discrétisée ", dans l'espace d'état et, à cette " signature", on associe des moyens de détection, y compris d'infirmation/confirmation, des moyens de datation et des moyens de qualification qui intègrent les autres éléments développés ci-dessus pour décrire l'évolution du processus.

Parce qu'elle intègre tous les éléments développés ci-dessus pour décrire l'évolution du processus, cette définition d'un phénomène-processus permet avantageusement, le cas échéant, de distinguer deux phénomènes présentant la même trajectoire dans l'espace d'état mais des évolutions différentes de certaines des grandeurs de perception sur cette même trajectoire ; la définition d'un phénomène-processus intègre ainsi l'évolution de grandeurs de perception sous forme d'événement-discrets ou d'événements-signaux (premier niveau), et/ou sous forme de chroniques d'événements (c'est à dire de phénomènes-signaux : deuxième niveau), voire sous forme de chroniques de phénomènes-signaux (troisième niveau).

Dans le mode de réalisation du procédé selon l'invention, la définition d'un phénomène-processus ou " Phénomène-processus " comprend alors celle

- d'un type de trajectoire dans l'espace d'état,
- de classes d'événements, et/ou de chroniques d'événements (phénomènes-signaux), et/ou de chroniques de phénomènes-signaux, notamment une classe pour la détection de début de phénomène-processus, une classe pour la détection de fin de phénomène-processus et une classe de qualification ; on peut aussi ajouter une classe pour l'infirmation et/ou une classe pour la confirmation du phénomène-processus.

Comme précédemment, une chronique peut être temporelle et s'exprime alors comme une liste de couples (Evt,DateEvt) ; elle peut être spatiale et s'exprime alors comme une liste de couples (Evt,PositionEvt) ; elle peut être également spatio-temporelle et s'exprime alors comme une liste de triplets (Evt,DateEvt,PositionEvt).

L'intérêt d'une définition aussi complète et précise d'un phénomène-processus est illustré par l'exemple simple ci-après : une batterie déchargée et une batterie court-circuitée d'automobile ont des effets communs sur le comportement de cette automobile: elle ne démarre pas, les phares ne s'allument pas plus que l'autoradio ; on risque donc de confondre un phénomène-processus de " court-circuit " et un phénomène-processus de " déchargement " de batterie, ces deux phénomènes étant pourtant différents ; ces deux phénomènes peuvent être alors distingués en considérant que le " déchargement " d'une batterie est un phénomène qualifié de plus lent que le " court-circuit "; des moyens des confirmation peuvent également être utilisés pour distinguer ces deux phénomènes, comme par exemple l'événement selon lequel les phares de l'automobile sont restés ou non allumés durant la nuit précédente, cet événement " phare allumé " et ce délai " nuit précédente " constituant alors une chronique ou événement-signal formant une classe à un seul élément de confirmation ou d'infirmation.

Cette définition des phénomène-processus, notamment au niveau des classes de détection et d'infirmation/confirmation, permet avantageusement de prendre en compte le caractère opportun ou non de la détection d'un phénomène-processus dans une situation courante donnée, intégrant les éléments du passé, du présent et du futur immédiat ; en terme cognitif, la définition de ces classes traduit des connaissances sur la causalité entre phénomènes ; par exemple, il n'est pas forcément " opportun " de prendre en compte un phénomène-processus, si ses " causes ", autres événements ou phénomènes antérieurs ou présents, ont déjà été prises en compte, ou si ses " effets ", autres événements ou phénomènes futurs, ne se produisent pas.

La définition du phénomène-processus passe aussi par celle de règles de datation qui s'appliquent aux éléments (événements, chroniques) des classes pour la détection de début et de fin de phénomène-processus ; par exemple, la règle de fixation de la date de début peut consister à prendre la " DateEvt" d'un événement ou la " DateDébutPhénomène-processus " d'un phénomène de la classe de détection de début.

La définition du phénomène-processus passe aussi par celle de règles de qualification ; comme pour les phénomènes-signaux, le qualificatif d'un phénomène-processus concerne par exemple l'amplitude de ce phénomène et/ou sa localisation ; le qualificatif d'un phénomène-processus peut varier dès son apparition jusqu'à sa fin, mais ne varie plus après ; comme exemples de qualificatif, on peut citer :

■ Qualificatif le plus récent ou la plus grave : le qualificatif attribué à un phénomène-processus est celui de l'instance la plus récente ou la plus grave dans l'ensemble des éléments de la classe de qualification.

■ Qualification majoritaire : le qualificatif attribué à un phénomène-processus est le qualificatif le plus souvent attribué aux instances dans l'ensemble des éléments de la classe de qualification.

■ Qualification de localisation : définie comme la zone géométrique minimale couvrant l'ensemble des grandeurs concernées par les éléments de la classe de qualification, ou comme la zone formée par l'ensemble des positions des éléments de la classe de qualification.

En l'absence de qualificatif de localisation, un phénomène-processus est qualifié de " global ".

A partir de cette définition des phénomènes-processus, lors de l'évolution de l'état du processus, on détecte donc une succession de phénomènes-processus et on aboutit à une liste ou " chronique " dont chaque élément comporte au moins les points suivants : nom du phénomène-processus, date de début, date de fin, liste de couples (qualificatif, date d'attribution du qualificatif).

Dans le procédé selon l'invention, la perception de l'état et de l'évolution du processus intègre donc à la fois le comportement global tel que décrit dans l'espace d'état et le comportement des grandeurs de perception.

Selon l'invention, la deuxième **FONCTION PRINCIPALE " JUGER "** doit aboutir à l'émission de messages vers l'environnement du processus, et notamment à destination des opérateurs de pilotage du système pour les aider à évaluer l'opportunité de modifier les réglages de certains actionneurs, de manière à satisfaire les objectifs courants de production du processus.

Ces messages doivent contenir une description des problèmes concernant la situation courante par rapport aux visées de production et doivent être accompagnés des informations nécessaires et suffisantes pour " convaincre " les opérateurs de l'importance des éventuels problèmes.

Ainsi, entre autres, ces messages doivent décrire l'état du processus et son caractère problématique, et fournir, à la demande, des explications sur l'état du processus et sur le problème rencontré.

L'émission de ces messages doit être effectuée en temps opportun et de manière opportune ; on peut ainsi trier les messages par gravité et n'émettre que les messages les plus graves ; il peut ainsi arriver qu'à l'issue d'un cycle d'acquisition d'informations, aucun message ne soit émis.

Enfin, lorsqu'ils sont destinés aux personnes en charge du pilotage, ces messages doivent être libellés dans un langage naturel, symbolique et/ou phénoménologique, comme des phrases accompagnées de graphiques.

Selon l'invention, la deuxième FONCTION PRINCIPALE "JUGER" comprend essentiellement les étapes suivantes :

1- Évaluer le contexte d'évolution du processus et classer les phénomènes-processus en instance selon des critères de gravité et selon ce contexte.

2- Émettre des messages concernant les phénomènes-processus classifiés comme les plus graves.

La PREMIERE ETAPE du JUGEMENT consiste à préparer les messages susceptibles d'être émis et les critères d'émission de ces messages, en évaluant le contexte d'évolution du processus et en classant les phénomènes-processus en instance selon des critères de gravité et selon ce contexte.

Dans le mode de réalisation du procédé selon l'invention, pour tenir compte du contexte de fonctionnement du processus, la qualification concernant la gravité d'un phénomène-processus passe par la définition :

- d'une classe d'événements, et/ou de chroniques d'événements (phénomènes-signaux), et/ou de chroniques de phénomènes-signaux (phénomènes-processus) qui définissent les éléments du contexte de fonctionnement du processus à prendre en compte pour qualifier le contexte et/ou la gravité,
- de règles de qualification du contexte et/ou de la gravité du phénomène-processus en instance, c'est à dire détecté et en cours, qui s'appliquent aux éléments ce cette classe, comme la nature et l'amplitude d'un phénomène processus spécifique appartenant à cette classe.

Dans le mode de réalisation du procédé selon l'invention, la qualification du contexte et de la gravité d'un phénomène-processus passe également par des règles de gestion des contextes.

On va d'abord décrire des règles générales ou particulières de qualification de contexte et les éléments, notamment des phénomène-processus, auxquels ces règles s'appliquent.

Le qualificatif de gravité d'un phénomène-processus concerne son caractère problématique du point de vue de la satisfaction des visées de fonctionnement du processus, qui sont mises à jour à chaque cycle d'acquisitions des données de fonctionnement : un phénomène-processus est problématique si sa présence obère la capacité des opérateurs de pilotage à satisfaire les objectifs de production.

Par conséquent, un phénomène-processus est qualifié en terme de gravité de " problématique ", " d'alarme " ou " d'avertissement " s'il est nécessaire d'en tenir compte pour interpréter l'évolution du comportement du processus et/ou pour engager des actions de correction ; par définition de ces règles de qualification, une instance de phénomène-processus qualifiée d' " Alarme " est plus préoccupante qu'une instance qualifiée d'" Avertissement " ; à l'inverse, les phénomène-processus détectés peuvent donc être qualifiés " sans gravité " s'il n'est pas nécessaire d'en tenir compte pour interpréter l'évolution du comportement du processus.

La définition de " contextes de classification en gravité " permet de porter un jugement sur la gravité d'un phénomène-processus en fonction du contexte réel d'exploitation du processus ; ainsi, tout phénomène-processus détecté est d'abord qualifié en gravité selon l'un des qualificatifs suivants :

■ " sans gravité " : dans l'ensemble des Phénomène-processus, il existe une catégorie de Phénomène-processus dont la détection ne revêt pas un caractère problématique en soit ; leur détection est alors justifiée par la nécessité de construire un état aussi complet que possible du processus.

■ "toujours grave" : dans l'ensemble des phénomène-processus, il existe une catégorie de phénomène-processus dont la détection revêt toujours, dans des conditions normales d'exploitation du processus, un caractère problématique et la détection d'une instance d'un tel Phénomène-processus nécessite toujours d'alerter les opérateurs du processus.

■ " contextuellement grave " : les Phénomène-processus de cette catégorie sont ceux pouvant revêtir un caractère problématique dans un contexte de fonctionnement, alors que dans une autre, ils peuvent être considérés comme étant anodins ; dans le premier cas, il est nécessaire d'alerter les opérateurs, alors que dans le second, cela peut être inutile ; le jugement porté sur la gravité de cette catégorie de phénomène-processus dépend donc de la situation courante décrite définie notamment par l'ensemble des phénomène-processus en cours (i.e. dont la date de début est connue mais pas la date de fin), et des phénomène-processus récemment terminés ; par définition, la gravité des phénomène-processus "contextuellement grave " dépend du contexte courant.

La gravité d'un phénomène-processus de la catégorie des phénomène-processus " contextuellement grave " est ensuite jugée à partir d'une synthèse de l'état présent et passé du processus tel que décrit par les éléments de la classe du contexte de ce phénomène-processus :

- cette synthèse est effectuée dans la perspective de la satisfaction des visées courantes ou des objectifs courants de production ;
- cette classe est composée d'événements, phénomènes-signaux ou autres phénomènes-processus et le contexte de classification est défini, entre autres, par des contraintes temporelles, exprimées en termes de présence ou d'absence d'instances d'au moins un autre phénomène-processus sur une période présente et passée.

D'une manière générale, on peut par exemple définir les contextes suivants :

■ Contexte " Processus Correct " dans le cas où l'état présent et passé du processus est conforme aux attentes des opérateurs de pilotage au sens où les visées ou objectifs de production sont susceptibles d'être respectés, sans qu'il soit nécessaire d'engager une action ; ce contexte correspond donc à un jugement " satisfaisant ".

■ Contexte " Processus Ralenti " dans le cas où l'on considère que l'état présent et passé du processus ne permettra plus aux opérateurs de satisfaire les visées ou objectifs de production poursuivis dans la situation présente ; ce contexte correspond donc à un jugement " insatisfaisant " et implique donc un risque de perte de production ; par définition, ce contexte correspond à au moins un autre phénomène-processus spécifique en cours, de la classe définissant ce contexte. Dans ce contexte, les seuls phénomène-processus " problématiques " sont en général des phénomène-processus qualifiés de " catastrophiques " au sens où leur instance aggrave la situation et risque de conduire à l'arrêt complet du processus, voire à la destruction de tout ou partie du procédé (i.e. perte partielle de la production et de l'outil de production).

■ Contexte " Processus Hors-Norme ".

Par définition également, ce contexte correspond à au moins un autre phénomène-processus spécifique en cours, de la classe définissant ce nouveau contexte ; ce contexte signifie que le processus n'est plus en exploitation. Dans ce contexte, le procédé selon l'invention n'est donc plus capable d'assurer une aide efficace à la conduite du processus car les relations causales liant les Phénomènes-signaux aux Phénomène-processus sont considérées comme n'étant plus valides. Dans ce contexte, les cinq étapes du procédé concernant la perception du processus sont poursuivies cycliquement afin de garantir la continuité des analyses et de continuer à émettre des messages de Phénomène-processus, mais la gravité des phénomène-processus en instance n'est plus qualifiée.

D'une manière plus spécifique à certains processus et à certains phénomènes-processus, dans le cas d'un haut-fourneau, on peut par exemple définir les contextes particuliers suivants :

■ Contexte " Vidange creuset correct ", défini par l'absence, sur les huit dernières heures, d'instance d'un phénomène-processus " Niveau rétention fonte creuset " de quelque qualification que ce soit.

■ Contexte " T°Fonte correcte ", défini par l'absence d'instance non terminée d'un phénomène-processus " NiveauT°Fonte" qualifié de " très élevé ", " bas " ou " très bas " et par l'absence, sur les huit dernières heures d'instance de phénomène-processus " T°Fonte Coulée " qualifié de " très élevée " ou " très basse " on voit donc ici que la définition du contexte appelle deux éléments différents (phénomènes-processus) dans la classe de contexte.

■ Contexte " Descente des charges correcte ", défini par l'absence d'instance d'un phénomène-processus " Accrochage " sur la dernière heure écoulée, et par l'absence d'instance d'un phénomène-processus " Qualité court terme de la décente des charges " sur les quatre dernières heures.

■ Contexte " Pertes thermiques correctes " ", défini par l'absence d'instance d'un phénomène-processus " Niveau de la charge thermique en paroi " de quelque qualification que ce soit.

On va ensuite décrire des règles de gestion des contextes de la manière suivante : un contexte utilisable pour qualifier la gravité d'un phénomène-processus est dit " actif " ; a contrario, un contexte inactif ne peut pas être utilisé pour qualifier la gravité d'un phénomène-processus.

En reprenant les définitions de contexte ci-dessus, les règles de gestion des contextes sont alors les suivantes :

■ Le contexte " Processus Hors Norme " est " actif " si la contrainte qui le définit est vérifiée ; il est " inactif " dans le cas contraire.

■ Si le contexte " Processus Hors Norme" est " actif", alors tous les autres contextes sont " inactifs " cette contrainte étant générale, elle ne sera pas reprise dans l'expression des règles suivantes de gestion des contextes.

■ Le contexte " Processus Ralenti " est " actif " si la contrainte le définissant est vérifiée ; il est " inactif " dans le cas contraire.

■ Si le contexte est "Processus Ralenti " est " actif ", alors tous les contextes particuliers et le contexte " Processus correct " sont " inactifs ".

■ Un contexte particulier est " actif " si le contexte " Processus Ralenti " est inactif et si la contrainte logico-temporelle qui le définit est satisfaite ; il est inactif dans le cas contraire.

■ Le contexte " Processus correct " est actif si le contexte " Processus Ralenti " est inactif et si tous les contextes intermédiaires sont actifs ; il est inactif dans le cas contraire.

Les règles de qualification de gravité et de contexte peuvent alors être complétées comme suit :

■ La gravité d'aucun phénomène-processus n'est qualifiée dans le contexte " Processus Hors-Norme ".

■ La gravité de tout phénomène-processus de la catégorie des " Phénomène-processus jamais grave " est qualifiée de " sans gravité ", quelques soient les contextes actifs, en dehors du cas : " Processus Hors-Norme ".

■ La gravité de tout phénomène-processus de la catégorie des " Phénomène-processus toujours grave " est qualifiée d' " Alarme " ou d' " Avertissement " ", quels que soient les contextes actifs, en dehors du cas " Processus Hors-Norme ", et en fonction d'un qualificatif attribué par les opérateurs.

■ La gravité de tout phénomène-processus de la catégorie des " Phénomène-processus contextuellement grave " est le qualificatif le plus grave de l'ensemble des qualificatifs attribués dans chacun des contextes actifs, toujours en dehors du cas " Processus Hors-Norme ".

La finalité de la qualification de la gravité d'un phénomène-processus étant l'émission, en temps réel, de messages vers les opérateurs de pilotage du processus, la datation des contextes doit être effectuée dès que cela est possible, c'est-à-dire à la date de détection de début et de fin des instances des éléments de la classe définissant un contexte, par exemple celle de phénomène-processus : la gravité des phénomène-processus non terminés est ainsi jugée en fonction du contexte courant.

A cette fin, les contextes de classification sont datés par rapport à la date courante :

■ La date de début d'un contexte est la date de détection du passage de l'état inactif à l'état actif.
■ La date de fin d'un contexte est la date de détection du passage de l'état actif à l'état inactif.

La DEUXIEME ETAPE du JUGEMENT consiste à émettre des messages vers l'environnement, en ne prenant en compte que les phénomènes-processus détectés les plus graves dans le contexte courant d'évolution du processus.

Selon l'invention, on classifie les phénomènes-processus détectés selon la qualification de leur gravité effectuée, le cas échéant, dans le contexte courant, évalué comme précédemment décrit.

Pour tout phénomène-processus qualifié de "alarme" ou de " avertissement ", on émet alors un message comprenant les éléments descriptifs de ce phénomène-processus, notamment sa nature et les éléments concernant son positionnement, sa datation et ses qualificatifs.

L'émission effective d'un message constitue une " alerte ".

Selon ce procédé, comme les opérateurs de pilotage ne sont informés en temps réel que des phénomène-processus qualifiés " d'alarme " ou " d'avertissement ", ces opérateurs ne sont pas informés, du moins en temps réel, de la présence d'un phénomène-processus sans gravité, quel que soit le contexte de fonctionnement du processus, ce qui évite avantageusement la saturation d'informations des opérateurs et leur permet de consacrer leur attention aux informations les plus pertinentes au moment opportun pour agir sur le pilotage du processus.

Enfin, les " alertes " peuvent être datées comme suit :

■ La date de l'alerte est la date la plus récente entre la date de début de l'éventuel contexte de qualification associé à la qualification de la gravité courante et la date de qualification de l'ampleur et de la localité de l'instance de Phénomène-processus (i.e. la DateAttributionQualificatif).

Ainsi, la date de l'alerte est fixée en temps réel, en fonction de l'évolution de l'état du processus, c'est-à-dire selon les changements de contexte de qualification et selon les changements de qualification de l'ampleur et de la localité de l'instance de phénomène-processus.

L'invention peut être avantageusement utilisée pour le pilotage de haut-fourneau, de four thermique, comme un four de cimenterie, un four à verre ou un four à brames, d'une installation de coulée continue de métal, de laminage ou de revêtement en continu de bande métallique ; l'invention ne se limite pas à l'exemple général ci-dessus donné à titre indicatif.

**Revendications**

1.  Procédé de pilotage d'un processus à partir d'informations émises par l'environnement dudit processus et en vue d'adresser des informations aux opérateurs dudit processus de nature à les aider à maintenir ou à ramener ledit processus dans ses objectifs de production, dans lequel :

    ayant au préalable défini des phénomène-processus en se basant sur un ou plusieurs critères d'évolution, selon au moins une variable de date et/ou de position, d'au moins une grandeur de perception de l'état dudit processus,

      - on acquiert périodiquement lesdites informations émises et on élabore, à partir de ces informations, des valeurs des grandeurs de perception utilisées pour la définition des phénomènes-processus,
      - on décrit l'état et l'évolution du processus par une succession de phénomènes-processus détectés,
      - et on adresse aux opérateurs des informations concernant les dits phénomènes-processus détectés,

    **caractérisé en ce qu'**il comprend une étape intermédiaire dans laquelle on juge chaque phénomène-processus détecté en fonction d'un contexte propre, lui-même décrit par d'autres phénomènes-processus,

    et **caractérisé en ce qu'**on adresse aux opérateurs lesdites informations concernant le phénomène-processus jugé uniquement lorsque son jugement a établi que ces informations sont nécessaires et opportunes dans ledit contexte pour aider à maintenir ou à ramener ledit processus dans ses objectifs de production,

    et **caractérisé en ce que** ledit processus est choisi dans le groupe comprenant un haut-fourneau, un four thermique, comme un four de cimenterie, un four à verre ou un four à brames, une installation de coulée continue de métal, et une installation de laminage ou de revêtement en continu de bande métallique.

**2.** Procédé selon la revendication 1 **caractérisé en ce que** la description de l'état et de l'évolution du processus et/ou celle de son contexte de fonctionnement comprend des chroniques d'événements, la définition desdits événements intégrant celle d'un ou plusieurs critères d'évolution d'au moins une grandeur de perception et chaque événement étant affecté d'une date et/ou d'une position, et chaque chronique étant formée d'une suite d'événements ordonnée suivant leur date et/ou leur position.

**3.** Procédé selon l'une quelconque des revendications précédentes **caractérisé en ce que** la définition préalable des phénomène-processus intègre également celle de types de chronique d'événements.

**4.** Procédé selon l'une quelconque des revendications précédentes **caractérisé en ce que** la définition des phénomène-processus et/ou des événements intègre également celle d'un ou plusieurs critères d'évolution de la dérivée première d'au moins une grandeur par rapport à une variable de date et/ou de position, cette dérivée étant fonction de cette variable.

**5.** Procédé selon l'une quelconque des revendications précédentes **caractérisé en ce que,** si les valeurs d'une grandeur ou, le cas échéant, de sa dérivée première sont ordonnées selon ladite variable de date et/ou de position pour former un " signal ", pour les critères d'évolution qui portent sur des paramètres calculés à partir de ce signal, à observer uniquement sur un intervalle prédéterminé de valeurs de ladite variable, appelé " échelle d'analyse ", la définition de chacun desdits critères passe par la classification de la valeur calculée de chaque paramètre sur lequel ledit critère porte dans différents sous-domaines prédéterminés du domaine de valeurs de ce paramètre, chaque sous-domaine étant défini par une borne inférieure et une borne supérieure.

**6.** Procédé selon l'une quelconque des revendications précédentes **caractérisé en ce que :**

- certains au moins desdits critères sont déterminés en fonction des objectifs de production dudit processus,
- les objectifs de production sont ré-évalués à chaque période d'acquisition desdites informations et lesdits critères remis à jour en conséquence.

**7.** Procédé selon la revendication 6 lorsqu'elle dépend de la revendication 5 **caractérisé en ce que**, pour déterminer lesdits critères en fonction des objectifs de production, on fait varier ces bornes en fonction de ces objectifs.

**8.** Utilisation du procédé selon l'une quelconque des revendications précédentes pour piloter un processus dynamique complexe.

**Claims**

**1.** Method for controlling a process on the basis of information output by the environment of the said process and with a view to directing information to the operators of the said process such as to help them to maintain the said process within its production objectives or to bring it back to said objectives, in which:

- process phenomena having previously been defined, based on one or more criteria of evolution, according to at least one data variable and/or position variable, of at least one perception quantity for assessing the state of the said process,
- the said information output is acquired periodically and values of the perception quantities used for the definition of the process phenomena are computed on the basis of this information,
- the state and the evolution of the process are described by a succession of detected process phenomena,
- and information relating to the said detected process phenomena is directed to the operators,

**characterized in that** it comprises an intermediate step in which each detected process phenomenon is appraised as a function of a specific context, itself described by other process phenomena, and **characterised in that** the said information relating to the appraised process phenomenon is directed to the operators only when the appraisal thereof has established that this information is necessary and opportune within the said context in order to help to maintain the said process within its production objectives or to bring it back to said objectives,

and **characterized in that** the said process is chosen from the group comprising a blast furnace, a heat furnace, such as a cement kiln, a glass furnace or a slab furnace, a continuous metal casting installation, and a metal strip rolling or continuous coating installation.

2. Method according to Claim 1, **characterized in that** the description of the state and of the evolution of the process and/or that of its operating context comprises event logs,

the definition of the said events incorporating the definition of one or more criteria of evolution of at least one perception quantity and each event being assigned a data and/or a position,

and each log being made up of an ordered series of events arranged according to their date and/or their position.

3. Method according to either of the preceding claims, **characterized in that** the prior definition of the process phenomena also incorporates the definition of event log types.

4. Method according to any one of the preceding claims, **characterized in that** the definition of the process phenomena and/or of the events also incorporates the definition of one or more criteria of evolution of the first derivative of at least one quantity with respect to a data variable and/or position variable, this derivative being dependent on this variable.

5. Method according to any one of the preceding claims, **characterized in that,**

if the values of a quantity or, as the case may be, of its first derivative are ordered according to the said data variable and/or position variable to form a "signal",

for the evolution criteria which pertain to parameters calculated on the basis of this signal, to be observed solely over a predetermined interval of values of the said variable, called the "analysis scale",

the definition of each of the said criteria involves the classification of the calculated value of each parameter to which the said criterion pertains within various predetermined sub-domains of the domain of values of this parameter, each sub-domain being defined by a lower bound and an upper bound.

6. Method according to any one of the preceding claims, **characterized in that,**

- certain at least of the said criteria are determined as a function of the production objectives of the said process,
- the production objectives are re-evaluated at each period of acquisition of the said information and the said criteria reupdated accordingly.

7. Method according to Claim 6 when it depends on Claim 5, **characterized in that**, to determine the said criteria as a function of the production objectives, these bounds are made to vary as a function of these objectives.

8. Use of the method according to any one of the preceding claims to control a complex dynamic process.

**Patentansprüche**

1. Verfahren zur Steuerung eines Prozesses ausgehend von Informationen, die von der Umgebung des Prozesses ausgesendet werden, und um Informationen an die Operatoren des Prozesses zu übermitteln, welche so beschaffen sind, dass sie ihnen helfen, den Prozess innerhalb seiner Produktionsziele zu halten oder zu ihnen zurückzuführen, bei dem:

nachdem vorab Prozessphänomene basierend auf einem oder mehrerer Entwicklungskriterien, gemäß mindestens einer Datums- und/oder Positionsvariablen, mindestens einer Wahrnehmungsgröße des Zustands des Prozesses definiert wurden,

- die ausgesendeten Informationen periodisch erfasst und ausgehend von diesen Informationen Werte der Wahrnehmungsgrößen erarbeitet werden, die für die Definition der Prozessphänomene verwendet werden,
- der Zustand und die Entwicklung des Prozesses durch eine Folge von erfassten Prozessphänomenen beschrieben werden,
- und den Operatoren Informationen betreffend die erfassten Prozessphänomene übermittelt werden,

**dadurch gekennzeichnet, dass** es einen Zwischenschritt aufweist, bei dem jedes erfasste Prozessphänomen in Abhängigkeit von einem eigenen Kontext beurteilt wird, der selbst von anderen Prozessphänomenen beschrieben wird, und **dadurch gekennzeichnet, dass** die Informationen betreffend das beurteilte Prozessphänomen nur dann an die Operatoren übermittelt werden, wenn sich aus seiner Beurteilung ergibt, dass diese Informationen in diesem Kontext notwendig und angebracht sind, um dazu beizutragen, den Prozess innerhalb seiner Produktionsziele zu halten oder zu ihnen zurückzuführen; und

**dadurch gekennzeichnet, dass** der Prozess aus der Gruppe ausgewählt wird, die einen Hochofen, einen Wärmebehandlungsofen, wie einen Zementbrennofen, einen Glasofen oder einen Brammenofen, eine Anlage zum kontinuierlichen Stranggießen von Metall und eine Anlage zum kontinuierlichen Walzen oder Beschichten eines Metallbands umfasst.

2. Verfahren nach Anspruch 1, **dadurch gekennzeichnet, dass** die Beschreibung des Zustands und der Entwicklung des Prozesses und/oder diejenige seines Betriebskontexts Ereignisberichte aufweist, wobei die Definition der Ereignisse diejenige eines oder mehrerer Entwicklungskriterien mindestens einer Wahrnehmungsgröße einschließt, und jedem Ereignis ein Datum und/oder eine Position zugewiesen wird,

und jeder Bericht von einer Folge von Ereignissen gebildet wird, die nach ihrem Datum und/oder ihrer Position geordnet ist.

3. Verfahren nach einem der vorhergehenden Ansprüche, **dadurch gekennzeichnet, dass** die vorhergehende Definition der Prozessphänomene ebenfalls diejenige von Typen von Ereignisberichten einschließt.

4. Verfahren nach einem der vorhergehenden Ansprüche, **dadurch gekennzeichnet, dass** die Definition der Prozessphänomene und/oder der Ereignisse ebenfalls diejenige eines oder mehrerer Entwicklungskriterien der ersten Ableitung mindestens einer Größe bezüglich einer Datums- und/oder Positionsvariablen einschließt, wobei diese Ableitung von dieser Variablen abhängt.

5. Verfahren nach einem der vorhergehenden Ansprüche, **dadurch gekennzeichnet, dass,**
wenn die Werte einer Größe oder ggf. ihrer ersten Ableitung gemäß der Datums- und/oder Positionsvariablen geordnet sind, um ein "Signal" zu bilden,
bei den Entwicklungskriterien, die sich auf ausgehend von diesem Signal berechnete Parameter beziehen, die nur über ein vorbestimmtes Werteintervall der Variablen, "Analyseskala" genannt, zu beachten sind,
die Definition jedes der Kriterien über die Einordnung des berechneten Werts jedes Parameters, auf den sich das Kriterium bezieht, in verschiedene vorbestimmte Teilbereiche des Wertebereichs dieses Parameters läuft, wobei jeder Teilbereich durch eine Untergrenze und eine Obergrenze definiert wird.

6. Verfahren nach einem der vorhergehenden Ansprüche, **dadurch gekennzeichnet, dass:**

- zumindest manche dieser Kriterien in Abhängigkeit von den Produktionszielen des Prozesses bestimmt werden,
- die Produktionsziele in jeder Erfassungsperiode der Informationen neu bewertet und die Kriterien dementsprechend aktualisiert werden.

7. Verfahren nach Anspruch 6, wenn er von Anspruch 5 abhängt, **dadurch gekennzeichnet, dass** zur Bestimmung der Kriterien in Abhängigkeit von den Produktionszielen diese Grenzen in Abhängigkeit von diesen Zielen verändert werden.

8. Verwendung des Verfahrens nach einem der vorhergehenden Ansprüche, um einen komplexen dynamischen Prozess zu steuern.

**Fig.1**

**Fig.2**